# EUROPEAN PATENT APPLICATION

(11) **EP 4 789 543 A1**
(43) Date of publication of application: **12.08.2026**
(21) Application number: 26156866.1
(22) Date of filing: 06.02.2026
(51) Int. Cl.: A21B 1/33, F24B 9/00, F24C 3/00, F24C 13/00, F24H 1/52, F24D 11/00, F28D 21/00, F24B 1/24, F24C 15/34

(54) **SYSTEM COMPRISING AN OVEN, AND METHOD FOR REVAMPING**

(30) Priority: 10.02.2025 IT 202500002412
(71) Applicant: Del Duca, Luciano, 6596 Gordola (CH)
(72) Inventor: Del Duca, Luciano, 6596 Gordola (CH)
(74) Representative: M. Zardi & Co S.A.

(57) **Abstract**

The present invention relates to a system (10) comprising: (a) an oven (2) which comprises an oven body (4) delimiting a baking chamber (6) and an access opening (8) to the baking chamber (8); said oven body (4) being at least partially made of at least one refractory material and having a vault-shaped portion (40); (b) at least one boiler (12) which delimits a receiving compartment (14) for a liquid, for example water for sanitary use; (c) at least one hydraulic circuit (16) for a heat transfer liquid, wherein said hydraulic circuit (16) comprises first heat-exchange means (18) in thermal contact with the baking chamber (6), second heat-exchange means (2) in thermal contact with the receiving compartment (14), and mechanical circulation means (24) for circulating said heat-transfer liquid between the first heat-exchange means (18) and the second heat-exchange means (20).

The first heat-exchange means (18) are attached to the oven body (4) and extend along an inner concave surface (26) or along an outer convex surface (28) of the oven body (4) so as to cover at least part of said surface (26; 28).

The present invention also relates to a method for revamping an oven comprising the steps (I)-(V).

## Description

### Field of the invention

The invention falls within the field of ovens made of refractory material used for the baking of foodstuffs such as pizza, focaccia and the like.

### Prior art

Since ancient times wood-fired ovens have been regarded as essential equipment for the baking of bread. More recently, these ovens have been widely used for the production of pizza and focaccia.

The aforementioned foodstuffs are baked by means of a combination of different baking systems which consist of direct contact of the dough with the baking plane, irradiation and convection which occur inside the oven as a result of combustion of the wood and the convective flows of the combustion gases.

However, wood-fired ovens may not be regarded as being efficient heat-producing machines, since a significant percentage of the heat generated by combustion is lost, or in any case not directly used for baking, as a result of thermal dispersion mechanisms.

The Applicant, after long and in-depth R&D investigation work, has developed a system and a method which are able to provide a suitable response to the existing limitations, drawbacks and problems. In particular, the Applicant has developed a system which is able to help reducing the problems associated with global heating resulting from the heat which is currently lost during baking in wood-fired ovens.

### Summary of the invention

The object of the invention is to overcome the aforementioned drawbacks of the prior art.

The aforementioned objects are achieved by means of a system 10 comprising:
(a) an oven 2 comprising an oven body 4 delimiting a baking chamber 6 and an access opening 8 to the baking chamber 6; said oven body 4 being at least partially made of at least one refractory material and having a vault-shaped portion 40;
(b) at least one boiler 12 delimiting a receiving compartment 14 for a liquid, for example water for sanitary use;
(c) at least one hydraulic circuit 16 for a heat transfer liquid, wherein said hydraulic circuit 16 comprises first heat-exchange means 18 in thermal contact with the cooking chamber 6, second heat-exchange means 20 in thermal contact with the receiving compartment 14, and mechanical circulation means 24 for circulating said heat transfer liquid between the first heat-exchange means 18 and the second heat-exchange means 20;
wherein the first heat-exchange means 18 are attached to the oven body 4 and extend along an inner concave surface 26 or along an outer convex surface 28 of the oven body 4 so as to cover at least part of said surface 26, 28.

The present invention also relates to a method for revamping an oven so as to provide a system, preferably the aforementioned system.

The oven to be revamped comprises an oven body delimiting a baking chamber and an access opening to the baking chamber; said oven body being at least partially made of at least one refractory material and having a vault-shaped portion. Optionally the oven body comprises an outer covering, e.g. thermal insulation.

Said method for revamping comprises the following steps:
(I) optional removal of the outer covering, if present;
(II) attachment of first heat-exchange means 18 to the oven body 4, in thermal contact with the baking chamber 6, said first heat-exchange means 18 extending along an inner concave surface 26 or along an outer convex surface 28 of the oven body 4 so as to cover at least part of said surface 26; 28;
(III) installation of at least one boiler 12 delimiting a receiving compartment 14 for a liquid;
(IV) installation of second heat-exchange means 20 in thermal contact with the receiving compartment 14 of the boiler 12;
(V) installation of mechanical circulation means 24 and construction of at least one hydraulic circuit 16 for a heat transfer liquid, wherein said hydraulic circuit 16 comprises the first heat-exchange means 18, the second heat-exchange means 20 and mechanical circulation means 24 for circulating said heat transfer liquid between the first heat-exchange means 18 and the second heat-exchange means 20.

### Advantages of the invention

The invention has the advantages which are listed below.

Advantageously, the system according to the present invention can be used in ovens with a form and characteristics such that hitherto the recovery of heat has not been possible.

Advantageously, the system according to the present invention provides the heat-exchange means with sufficient freedom for thermal expansion and compression without damaging the oven body owing to a free space which allows unrestricted temperature adjustments.

Advantageously, the hydraulic serpentines used in the system according to the present invention allow a great deal of freedom as regards the design of ovens with widely varying forms.

Advantageously, the system according to the present invention is such that it may be used for the revamping of existing ovens and, even more so, for the construction of new ovens.

Advantageously, the system according to the present invention allows significant amounts of heat to be intercepted and used/exported for purposes other than baking, for example for the generation of hot water for sanitary use.

Advantageously, the system according to the present invention may be used to recover heat in specific zones of the oven, or from the whole of the oven vault, depending on the thermal requirements of downstream user appliances.

Advantageously, the arrangement and the distribution density of the serpentines (e.g. spacing between them) may be designed to satisfy varying energy requirements.

Advantageously, the system according to the present invention allows pre-heating or post-heating of the heat transfer liquid and therefore a further increase in the amount of heat, which traditionally remains unused.

Advantageously, the system according to the present invention can be used both in wood-fired ovens and in combined wood-fired and gas-fueled ovens.

### Preferred embodiments

Preferably, the oven 2 is a pizza oven.

In accordance with one embodiment, the at least one refractory material comprises or consists of refractory bricks joined together by refractory cement.

Preferably, the oven 2 comprises a baking surface 36 delimiting the baking chamber 6 underneath.

Preferably, the inner concave surface 26 or said outer convex surface 28 comprises a circular, semi-circular, cylindrical, semi-cylindrical, spherical or semi-spherical surface, or combinations thereof.

In accordance with a preferred embodiment, the baking surface 36 is fireproof and configured to withstand temperatures of comprised from 250°C to 550°C, preferably from between 300°C to 500°C, and even more preferably from 340°C to 480°C.

In accordance with various embodiments, the baking surface 36 is made of stone, for example natural stone, or consists of at least one refractory material, more preferably comprising or consisting of refractory bricks which are joined together by refractory cement.

Optionally, the oven 2 comprises a burner fueled by gas (for example methane gas) which is housed inside the baking chamber 6.

In accordance with various embodiments, the vault-shaped portion 40 could be a barrel vault, a dome vault or a sail vault.

Preferably, the heat transfer liquid comprises water or a liquid boiling at temperatures higher than 100°C at atmospheric pressure.

In accordance with various embodiments, the hydraulic circuit 16 is a closed hydraulic circuit (i.e. with a closed vessel) or open hydraulic circuit.

According to this embodiment, the hydraulic circuit 16 could comprise a rigid container (not shown) divided up into two variable-volume chambers by an elastic membrane. One chamber contains the heat transfer liquid of the circuit, while the other chamber contains air (or another gas). The elastic membrane is movable between the two chambers in order to compensate for any increase in pressure - and consequently volume - inside the chamber containing the heat transfer liquid of the hydraulic circuit.

According to another embodiment, the open hydraulic circuit 16 comprises at least one expansion vessel 46 at atmospheric pressure.

In accordance with one embodiment, the first heat-exchange means 18 and the refractory material are kept at a distance by means of one or more spacer elements, so that the first heat-exchange means 18 do not lie in abutment against the refractory material.

Preferably, the oven 2 comprises a heat-conducting material arranged in a space delimited between said first heat-exchange means 18 and said refractory material. By way of example, said heat-conducting material is in the form of a strip, preferably a metal strip, more preferably a copper strip.

In accordance with various embodiments, the first heat-exchange means 18, and/or the second heat-exchange means 20, and/or the third heat-exchange means 22 comprise one or more hydraulic serpentines 30. By way of example, said one or more serpentines comprise one or more metal pipes, preferably one or more copper pipes.

The first heat-exchange means 18 comprises preferably one or more hydraulic serpentines 30 wound so as to cover said inner concave surface 26 or said outer convex surface 28.

More preferably, at least one of said one or more hydraulic serpentines 30 is wound in three-dimensional coils and windings so as to cover a tapered upper portion of the oven body 4.

More preferably, at least one of said one more hydraulic serpentines 30 is wound in semi-circular coils or windings terminating at side edges 32 delimiting the access opening 8.

Even more preferably, at least one of said one or more hydraulic serpentines 30 is wound so as to cover said oven body 4 with a plurality of coils or windings which extend from a baking surface vertically as far as an upper portion of the oven body 4.

In accordance with a preferred embodiment, the oven 2 comprises at least one flue pipe 34 fluidically communicating with the baking chamber 6.

Preferably, the hydraulic circuit 16 comprises third heat-exchange means 22 in thermal contact with the flue pipe 34. In particular, one or more hydraulic serpentines 30 could be wound in coils or windings so as to cover an inner surface or outer surface of the flue pipe.

More preferably, the third heat-exchange means 22 are arranged fluidically along said hydraulic circuit 16 so that the heat transfer liquid circulates first through the third heat-exchange means 22 and then through the first heat-exchange means 18, or first through the first heat-exchange means 18 and then through the third heat-exchange means 22, and only then through the second heat-exchange means 20.

The advantages of the invention will emerge even more clearly from the detailed description given below based on the attached figures provided by way of example and therefore of a non-limiting nature.

### Description of the figures

- Figs. 1-3:: system according to the present invention in accordance with three different embodiments;
- Figs. 4-6:: ovens in accordance with various embodiments, which can be used in the system according to the preceding figures, said ovens differing in terms of the arrangement of the first heat-exchange means;
- Fig. 7:: oven in accordance with another embodiment comprising a flue pipe, said oven being able to be used in the system according to Figures 1-3.

### Detailed description of the invention according to preferred embodiments of the system

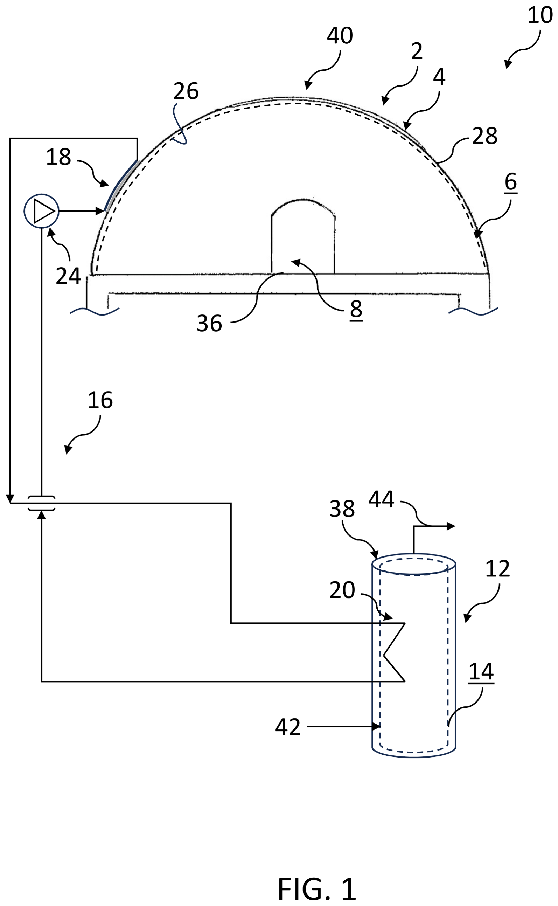

Fig. 1 shows a system 10 comprising an oven 2, at least one boiler 12 and at least one hydraulic circuit 16 which extends between the oven 2 and the boiler 12.

The oven 2 comprises an oven body 4 at least partially made of at least one refractory material.

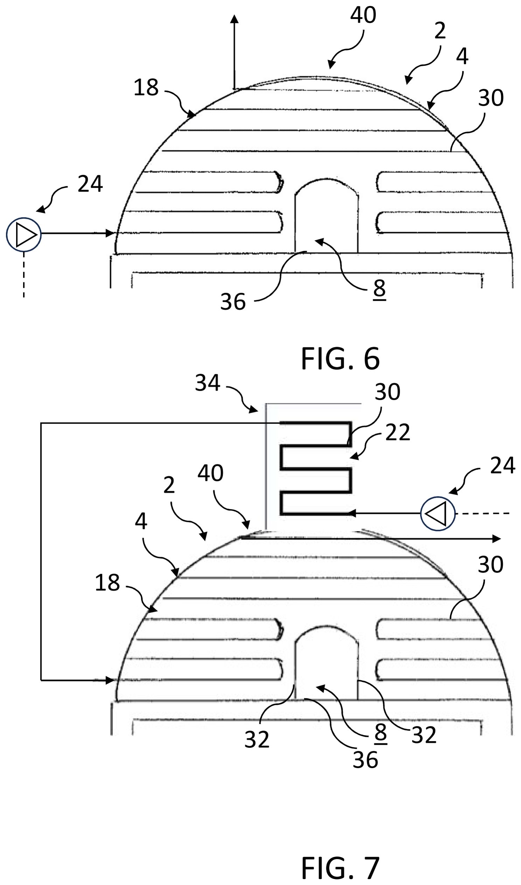

Said oven body 4 delimits a baking chamber 6 and an access opening 8 to the baking chamber 6. The baking chamber 6 is delimited underneath by a baking surface 36. Inside the baking chamber 6 combustion of at least one combustible material (for example wood and/or gas) takes place in the presence of atmospheric air. In the case where a gas is used, a gas-fueled burner (not shown) is housed inside the baking chamber 6. The fumes generated by combustion exit the backing chamber through a flue pipe (shown for example in Fig. 7) which is in fluid communication with the baking chamber 6.

The access opening 8 is designed to allow the introduction of one or more pizzas to be baked inside the baking chamber 6 and to allow said pizza(s) to be removed from said chamber 6 once cooked.

The oven body 4 has a vault-shaped portion 40. In the embodiment, the portion 40 is generally shaped in the form of a spherical basin (cap-like) vault.

A thickness of the oven body 4, and preferably of the vault-shaped portion 40, is delimited by an inner concave surface 26 facing the baking chamber 6 and by an opposite outer convex surface 28 directed towards the outside of the baking chamber 6.

First heat-exchange means 18 lie in thermal contact with the baking chamber 6. In particular, the first heat-exchange means 18 are attached on the outside of the oven body 4, namely along the outer convex surface 28 of the oven body 4 so as to cover at least part of said surface 28.

In this way, the heat generated by the combustion of the at least one combustible material and conducted through the thickness of the oven body 4 reaches the first heat-exchange means 18.

The boiler 12 delimits a receiving compartment 14 for a liquid, for example water for sanitary use. The boiler 12 could comprise a boiler body 38 which is preferably heat insulated.

Second heat-exchange means 20 lie in thermal contact with the receiving compartment 14. In the embodiment shown, the second heat-exchange means 20 are at least partially housed inside the receiving compartment 14 so that there is thermal and physical contact with the liquid contained in the boiler 12.

Said embodiment, however, must not be regarded as limiting the present invention since other embodiments could envisage thermal, but not physical contact.

The boiler 12 is filled via a liquid supply line 42 which, for example, is connected to a municipal water supply system. The liquid heated inside the receiving compartment 14 is drawn off via a take-off line 44.

The hydraulic circuit 16 contains a heat transfer liquid, for example water. The hydraulic circuit shown here is a closed hydraulic circuit (i.e. with a closed vessel).

This hydraulic circuit 16 comprises the first heat-exchange means 18 in thermal contact with the baking chamber 6, the second heat-exchange means 20 in thermal contact with the receiving compartment 14, and mechanical circulation means 24.

The mechanical circulation means, for example a pump or a circulating unit, are configured to circulate the heat transfer liquid between the first heat-exchange means 18 and the second heat-exchange means 20. In this way, the heat drawn off via the first heat-exchange means 18 may be released to the second heat-exchange means 20, and then this heat may be transferred from the second heat-exchange means 20 to the liquid contained inside the boiler 12 so as to heat it.

It is pointed out that the embodiment shown in Fig. 1, as well as the other embodiments illustrated below, could comprise other components (for example, thermostats, safety valves, deviator valves, discharge valves, etc.) which are not shown in the drawings for greater clarity.

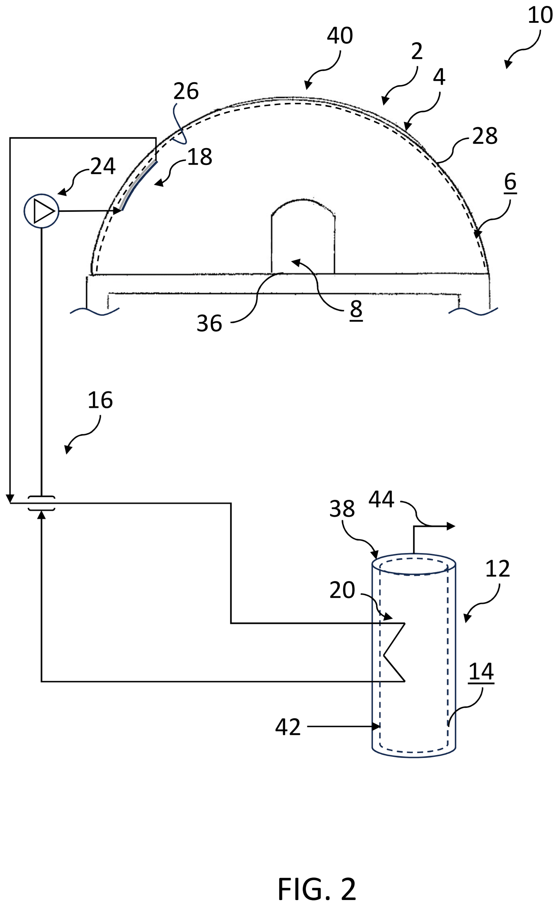

Fig. 2 shows a system 10 in accordance with a different embodiment of the present invention.

This system differs from the system shown in Fig. 1 in that the heat-exchange means 18 are attached on the inside of the oven body 4, namely along the inner concave surface 26 of the oven body 4 so as to cover at least part of said surface 26.

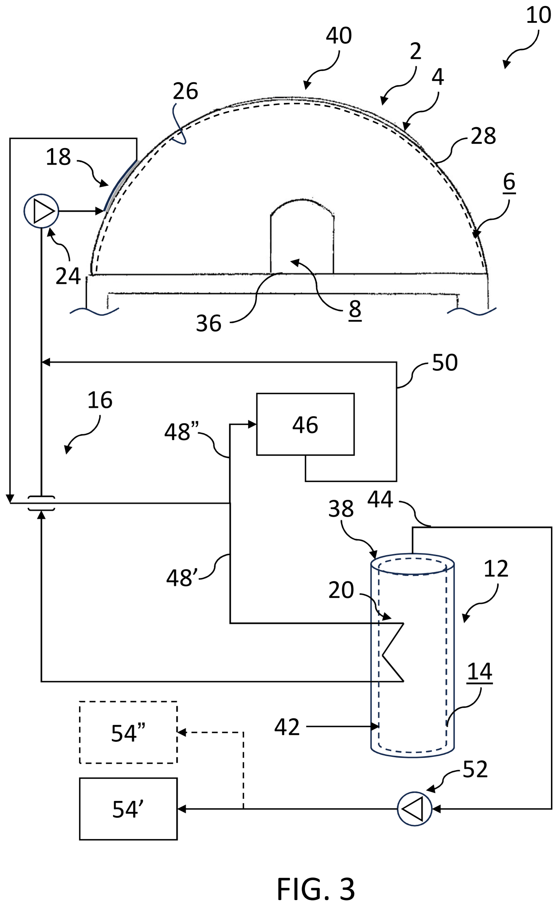

Fig. 3 shows a system 10 in accordance with a further embodiment of the present invention.

It is pointed out that, although the first heat-exchange means 18 are shown attached on the outside as in Fig. 1, the embodiment of Fig. 3 is applicable also for first heat-exchange means 18 which are fixed on the inside as shown in Fig. 2.

The embodiment shown in Fig. 3 differs from the embodiments shown in Fig. 1 or Fig. 2 in that the hydraulic circuit 16 is an open hydraulic circuit comprising an expansion vessel 46.

Accordingly, the heat transfer liquid exiting the first heat-exchange means 18 may be partly conveyed to the second heat-exchange means 20 via a first line 48', and partly to the expansion vessel 46 via a second line 48".

Since the expansion vessel 46 is open, the pressure inside it is the same as the atmospheric pressure. Therefore, in the event of an overpressure in the hydraulic circuit, a part of this pressure may be released into the atmosphere without generating an overpressure in the hydraulic circuit.

A third line 50 extends from the expansion vessel 46 towards an intake side of the mechanical circulation means 24. In this way, the heat transfer liquid drawn off from the expansion vessel 46 may, if necessary, be introduced back into the hydraulic circuit 16.

The embodiment shown in Fig. 3 differs from the embodiments shown in Fig. 1 or Fig. 2 also in that the take-off line 44 is connected to a suction pump 52, which supplies the liquid to one or more user appliances 54', 54".

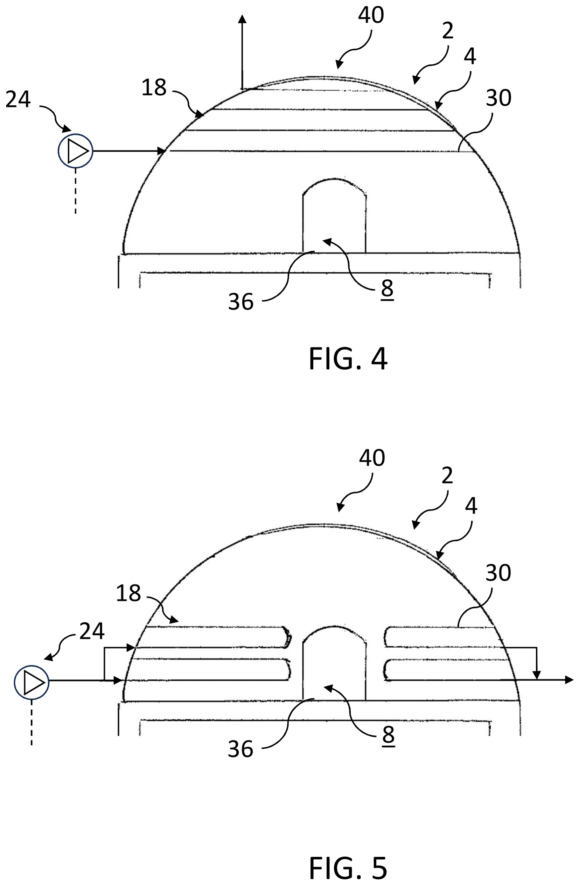

Figs. 4-6 show ovens in accordance with various embodiments, these ovens differing in terms of the arrangement of the first heat-exchange means on the oven body 4.

Fig. 4 show a hydraulic serpentine 30 wound in three-dimensional coils or windings so as to cover a tapered upper portion of the oven body 4. A lower portion of the oven body 4 is instead devoid of first heat-exchange means.

Fig. 5 shows a hydraulic serpentine 30 which is wound in semi-circular coils or windings terminating at side edges 32 delimiting the access opening 8. In particular, the coils or windings of the hydraulic serpentine 30 do not extend in a completely circular manner around the oven body 4, but in a semi-circular manner owing to the discontinuity due to the access opening 8. A tapered upper portion of the oven body 4 is instead devoid of first heat-exchange means.

Fig. 6 shows an oven 2 comprising a hydraulic serpentine 30 which combines the embodiments of Fig. 4 and Fig. 5. More specifically, said one or more serpentines 30 are wound so as to cover the oven body 4 with a plurality of coils or windings which extend from the baking surface 36 vertically as far as a tapered upper portion of the oven body 4.

Fig. 7 shows an oven in accordance with another embodiment in which the oven comprises a flue pipe 34 in thermal contact with third heat-exchange means 22 of the hydraulic circuit 16.

According to this embodiment, the third heat-exchange means 22 are arranged fluidically along the hydraulic circuit 16 so that the heat transfer liquid circulates first through the third heat-exchange means 22 and then through the first heat-exchange means 18, and only then through the second heat-exchange means 20. Therefore, in the direction of flow of the heat transfer liquid shown in Fig. 7, the third heat-exchange means 22 perform pre-heating of the heat transfer liquid before it crosses the first heat-exchange means 18 and then the second heat-exchange means 20.

On the other hand, in a direction of flow of the heat transfer liquid opposite to that shown in Fig. 7, the third heat-exchange means 22 are arranged fluidically along the hydraulic circuit 16 so that the heat transfer liquid circulates first through the first heat-exchange means 18 and then through the third heat-exchange means 22. The first heat-exchange means 18 therefore perform pre-heating of the heat transfer liquid before it crosses the third heat-exchange means 22 and then the second heat-exchange means 20.

### Detailed description of the invention according to preferred modes of implementation of the revamping method

An oven to be revamped comprises an oven body delimiting a baking chamber and an access opening to the baking chamber. Said oven body is at least partially made of at least one refractory material and has a vault-shaped portion. Optionally the oven body comprises an outer covering.

During a step (I), the outer covering, if present, is removed.

During a step (II), first heat-exchange means 18 are attached to the oven body 4, in thermal contact with the baking chamber 6 so that the first heat-exchange means 18 extend along an inner concave surface 26 or along an outer convex surface 28 of the oven body 4 so as to cover at least part of said surface 26, 28.

During step (II), the first heat-exchange means 18 and the refractory material preferably are kept at a distance by means of one or more spacer elements, so that the first heat-exchange means 18 do not lie in abutment against the refractory material.

Optionally, after step (I) and before step (II), the method comprises an arrangement of a heat-conducting material, for example in the form of a strip, in a space delimited between the first heat-exchange means 18 and the refractory material.

During a step (III) at least one boiler 12 delimiting a receiving compartment 14 for a liquid is installed.

During a step (IV) second heat-exchange means 20 are installed in thermal contact with the receiving compartment 14 of the boiler 12. If the boiler 12 of step (III) is already provided with second heat-exchange means 20, for example hydraulic serpentines, step (III) and step (IV) are performed at the same time.

During a step (V) mechanical circulation means 24, for example a circulating unit, are installed and at least one hydraulic circuit 16 for a heat transfer liquid is constructed.

Said hydraulic circuit 16 comprises the first heat-exchange means 18, the second heat-exchange means 20, and the mechanical circulation means for circulating the heat transfer liquid between the first heat-exchange means 18 and the second heat-exchange means 20.

Optionally, during a step (VI) following step (II), the method comprises the application of a least one covering layer, for example a thermal insulation, arranged on top of the first heat-exchange means 18.

Even though not specified beforehand, a person skilled in the art may envisage using typical expert knowledge of the sector in order to vary or replace some of the features indicated above with other technically equivalent elements.

These variations or replacements also fall within the scope defined by the following claims.

Moreover, each alternative solution illustrated in relation to a particular embodiment may be realized independently of the other variants described.

### LIST OF REFERENCE NUMBERS

- 2: oven, preferably a pizza oven
- 4: oven body
- 6: baking chamber
- 8: access opening
- 10: system
- 12: boiler
- 14: receiving compartment
- 16: hydraulic circuit, preferably a closed or open hydraulic circuit
- 18: first heat-exchange means
- 20: second heat-exchange means
- 22: third heat-exchange means
- 24: mechanical circulation means
- 26: inner concave surface
- 28: outer convex surface
- 30: hydraulic serpentine
- 32: side edge
- 34: flue pipe
- 36: baking surface
- 38: boiler body
- 40: vault-shaped portion
- 42: supply line
- 44: take-off line
- 46: expansion vessel
- 48': first line
- 48": second line
- 50: third line
- 52: suction pump
- 54': user appliance
- 54": user appliance

## Claims

1. A system (10) comprising:
(a) an oven (2) comprising an oven body (4) delimiting a baking chamber (6) and an access opening (8) to the baking chamber (6); said oven body (4) being at least partially made of at least one refractory material and having a vault-shaped portion (40);
(b) at least one boiler (12) delimiting a receiving compartment (14) for a liquid, such as water for sanitary use;
(c) at least one hydraulic circuit (16) for a heat transfer liquid, wherein said hydraulic circuit (16) comprises first heat-exchange means (18) in thermal contact with the baking chamber (6), second heat-exchange means (20) in thermal contact with the receiving compartment (14), and mechanical circulation means (24) for circulating said heat transfer liquid between the first heat-exchange means (18) and the second heat-exchange means (20);
wherein the first heat-exchange means (18) are attached to the oven body (4) and extend along an inner concave surface (26) or along an outer convex surface (28) of the oven body (4), so as to cover at least part of said surface (26; 28).

2. The system according to the preceding claim, wherein the first heat-exchange means (18) and the refractory material are kept at a distance by means of one or more spacer elements, so that the first heat-exchange means (18) do not lie in abutment against the refractory material;
preferably said oven (2) comprising a heat conducting material arranged in a space delimited between said first heat-exchange means (18) and said refractory material.

3. The system according to any of the preceding claims, wherein said first heat-exchange means (18) comprise one or more hydraulic serpentines (30) wound so as to cover said part of the inner concave surface (26) or outer convex surface (28).

4. The system according to claim 3, wherein at least one of said one or more hydraulic serpentine(s) (30) is wound in three-dimensional coils or windings so as to cover a tapered upper portion of the oven body (4).

5. The system according to claim 3, wherein at least one of said one or more hydraulic serpentine(s) (30) is wound in semi-circular coils or windings terminating at side edges (32) delimiting the access opening (8).

6. The system according to any one of the preceding claims, wherein said oven (2) comprises at least one flue pipe (34) fluidically communicating with said baking chamber (6), and wherein said hydraulic circuit (16) comprises third heat-exchange means (22) in thermal contact with said flue pipe (34).

7. The system according to the previous claim, wherein the third heat-exchange means (22) are fluidically arranged along said hydraulic circuit (16) so that the heat transfer liquid circulates first through the third heat-exchange means (22) and then through the first heat-exchange means (18), or first through the first heat-exchange means (18) and then through the third heat-exchange means (22), and only then through the second heat-exchange means (20).

8. The system according to any of the preceding claims, wherein the oven (2) includes a baking surface (36) delimiting the baking chamber (6) underneath and, optionally, a gas-fueled burner housed in the baking chamber (6), said baking surface (36) being fireproof and configured to withstand temperatures comprised from 250 °C to 550 °C, preferably comprised from 300 °C to 500 °C, even more preferably comprised from 340 °C to 480 °C.

9. A method for revamping an oven to give a system, such as a system (10) according to any of the preceding claims;
wherein the oven to be revamped includes an oven body delimiting a baking chamber and an access opening to the baking chamber; said oven body being at least partially made of at least one refractory material and having a vault-shaped portion;
optionally the oven body including an outer covering, e.g. thermal insulation;
wherein said method includes the following steps:
(I) optionally removal of the outer covering, if present;
(II) attachment of first heat-exchange means (18) to the oven body (4), in thermal contact with the baking chamber (6), said first heat-exchange means (18) extending along an inner concave surface (26) or along an outer convex surface (28) of the oven body (4), so as to cover at least part of said surface (26; 28);
(III) installation of at least one boiler (12) delimiting a receiving compartment (14) for a liquid;
(IV) installation of second heat-exchange means (20) in thermal contact with the receiving compartment (14) of the boiler (12);
(V) installation of mechanical circulation means (24) and construction of at least one hydraulic circuit (16) for a heat transfer liquid, wherein said hydraulic circuit (16) comprises the first heat-exchange means (18), the second heat-exchange means (20), and mechanical circulation means (24) for circulating said heat transfer liquid between first heat-exchange means (18) and second heat-exchange means (20).

10. The method for revamping according to the preceding claim, wherein, in step (II), the first heat-exchange means (18) and the refractory material are kept at a distance by means of one or more spacer elements, so that the first heat-exchange means (18) do not lie in abutment against the refractory material;
preferably, after step (I) and before step (II), said method comprising an arrangement of a heat conducting material in a space delimited between said first heat-exchange means (18) and said refractory material.
